(19) **Europäisches Patentamt**

**European Patent Office**

**Office européen des brevets**

(11) **EP 1 071 999 B1**

(12) **EUROPÄISCHE PATENTSCHRIFT**

(45) Veröffentlichungstag und Bekanntmachung des Hinweises auf die Patenterteilung:
**02.05.2002 Patentblatt 2002/18**

(21) Anmeldenummer: **99916760.4**

(22) Anmeldetag: **26.02.1999**

(51) Int Cl.$^7$: **G06F 17/00**

(86) Internationale Anmeldenummer:
**PCT/DE99/00524**

(87) Internationale Veröffentlichungsnummer:
**WO 99/48020 (23.09.1999 Gazette 1999/38)**

(54) **VERFAHREN UND ANORDNUNG ZUR RECHNERGESTÜTZTEN ERMITTLUNG EINER ABBILDUNGSVORSCHRIFT**

METHOD AND ARRANGEMENT FOR COMPUTER-ASSISTED DETERMINATION OF A REPRESENTATION SPECIFICATION

PROCEDE ET SYSTEME POUR LA DETERMINATION ASSISTEE PAR ORDINATEUR D'UNE SPECIFICATION DE REPRESENTATION

(84) Benannte Vertragsstaaten:
**DE FI FR GB NL**

(30) Priorität: **18.03.1998 DE 19811906**

(43) Veröffentlichungstag der Anmeldung:
**31.01.2001 Patentblatt 2001/05**

(73) Patentinhaber: **SIEMENS AKTIENGESELLSCHAFT 80333 München (DE)**

(72) Erfinder:
• **LANG, Bernhard**
  **D-80636 München (DE)**
• **POPPE, Thomas**
  **D-80689 München (DE)**

(56) Entgegenhaltungen:
**US-A- 5 513 097**

• **LIN Y ET AL: "USING FUZZY PARTITIONS TO CREATE FUZZY SYSTEMS FROM INPUT-OUTPUT DATA AND SET THE INITIAL WEIGHTS IN A FUZZY NEURAL NETWORK" IEEE TRANSACTIONS ON FUZZY SYSTEMS, Bd. 5, Nr. 4, 1. November 1997 (1997-11-01), Seiten 614-621, XP000725072 ISSN: 1063-6706**
• **DELGADO M ET AL: "A FUZZY CLUSTERING-BASED RAPID PROTOTYPING FOR FUZZY RULE-BASED MODELING" IEEE TRANSACTIONS ON FUZZY SYSTEMS, Bd. 5, Nr. 2, 1. Mai 1997 (1997-05-01), Seiten 223-233, XP000688811 ISSN: 1063-6706**
• **LOTFI A ET AL: "LEARNING FUZZY INFERENCE SYSTEMS USING AN ADAPTIVE MEMBERSHIP FUNCTION SCHEME" IEEE TRANSACTIONS ON SYSTEMS, MAN AND CYBERNETICS. PART B: CYBERNETICS, Bd. 26, Nr. 2, 1. April 1996 (1996-04-01), Seiten 326-331, XP000582920 ISSN: 1083-4419**
• **KUEPPER K: "SELF LEARNING FUZZY MODELS USING STOCHASTIC APPROXIMATION" PROCEEDINGS OF THE CONFERENCE ON CONTROL APPLICATIONS, GLASGOW, AUG. 24 - 26, 1994, Bd. 3, Nr. CONF. 3, 24. August 1994 (1994-08-24), Seiten 1723-1728, XP000679403 INSTITUTE OF ELECTRICAL AND ELECTRONICS ENGINEERSISBN: 0-7803-1873-0**
• **ZIA F ET AL: "NEURO-FUZZY CONTROL USING SELF-ORGANIZING NEURAL NETS" PROCEEDINGS OF THE CONFERENCE ON FUZZY SYSTEMS, ORLANDO, JUNE 26 - 29, 1994, Bd. 1, Nr. CONF. 3, 26. Juni 1994 (1994-06-26), Seiten 70-75, XP000529239 INSTITUTE OF ELECTRICAL AND ELECTRONICS ENGINEERSISBN: 0-7803-1897-8**
• **VALENZUELA-RENDON M: "THE FUZZY CLASSIFIER SYSTEM: A CLASSIFIER SYSTEM FOR CONTINUOUSLY VARYING VARIABLES" PROCEEDINGS OF THE INTERNATIONAL CONFERENCE ON GENETIC ALGORITHMS, SAN DIEGO, JULY 13 - 16, 1991, Nr. CONF. 4, 13. Juli 1991 (1991-07-13), Seiten 346-353, XP000260123 BELEW R K;BOOKER L B**

EP 1 071 999 B1

**Beschreibung**

Die Erfindung bezieht sich auf die Ermittlung einer Abbildungsvorschrift. Durch eine solche Abbildungsvorschrift wird im Rahmen einer Abbildung durch ein neuronales Netz oder durch ein Fuzzy-System eine Eingangsgröße auf eine Ausgangsgröße abgebildet.

Eine Ermittlung einer derartigen Abbildungsvorschrift für eine Abbildung durch ein sogenanntes Radiale-Basisfunktionen-Netz (RBF-Netz) vom Typ Local Linear Map oder Multi Adaline ist aus [1] bekannt.

Grundlagen eines Radiale-Basisfunktionen-Netzes (RBF-Netz) sind aus [4] bekannt.

Ein Radiale-Basisfunktionen-Netz ist ein spezielles vorwärtsgerichtetes neuronales Netz, welches eine Abbildung beschreibt, durch die eine Eingangsgröße auf eine Ausgangsgröße abgebildet wird, und welches nur eine Schicht von verdeckten Neuronen besitzt. Ein verdecktes Neuron weist jeweils eine spezielle, radialsymmetrische (radiale) Zugehörigkeitsfunktion (Aktivierungsfunktion) auf.

Eine Zugehörigkeitsfunktion bzw. Aktivierungsfunktion ist mathematisch gesehen eine Basisfunktion eines Teilsystems (Teilmodell) eines Systems von Funktionen auf einem Raum (Gesamtmodell). Das Gesamtmodell wird für eine Abbildung, welche eine Eingangsgröße auf eine Ausgangsgröße in dem Raum abbildet, eingesetzt.

Dabei beschreibt eine Zugehörigkeitsfunktion bzw. Aktivierungsfunktion eine Zugehörigkeit eines Datenpunkts in dem Raum zu dem entsprechenden Teilmodell.

Das Teilmodell weist ein sogenanntes Zentrum auf, welches ein Datenpunkt in dem Raum ist, für welchen Datenpunkt die Zugehörigkeitsfunktion ein absolutes Maximum liefert. Mit zunehmendem Abstand eines ausgewählten Datenpunkts von dem Zentrum verringert sich der Wert der Zugehörigkeitsfunktion für den ausgewählten Datenpunkt.

Aus [4] ist bekannt, als eine Zugehörigkeitsfunktion eine Gaußfunktion zu verwenden.

Ein RBF-Netz, wie es aus [4] bekannt ist, läßt sich wie folgt beschreiben:

Es sei f: $\mathbf{R}^n \to \mathbf{R}$ eine Funktion von $\mathbf{R}^n$ nach $\mathbf{R}$, die durch N Stützstellen gegeben ist. Jede Stützstelle i besteht aus einem n-dimensionalen Eingabevektor $X_i=(X_{i1}, ..., X_{in})$ und einem dazugehörigen reellwertigen Funktionswert $y_i \in \mathbf{R}$. Als Interpolationsbedingung gilt:

$$f(X_i) = y_i \text{ für alle } i=1,...,N. \tag{1}$$

Das für eine Approximation verwendete Funktionensystem besteht aus radialsymmetrischen Basisfunktionen $h_i$, die jeweils einer Stützstelle als jeweiligem Zentrum zugeordnet sind. Sie sind wie folgt definiert:

$$h_i(X) := f(\| X - X_i \|). \tag{2}$$

Die Basisfunktion $h_i$ hat positive skalare Werte. Sie ist nur abhängig von einem Abstand eines Vektors $\mathbf{X}$ von der entsprechenden Stützstelle $\mathbf{X}_i$, die einem Neuron i zugeordnet ist, in einer beliebigen, vorgegebenen Norm. Meist wird ein euklidischer Abstand zwischen den Vektoren $\mathbf{X}$ und $\mathbf{X}_i$ im $\mathbf{R}^n$ als Norm verwendet. Damit erhält man folgende Darstellung für das RBF-Netz:

$$f(X) = \sum_{i=1}^{N} c_i * h_i(\|X - X_i\|) \tag{3}$$

mit:

$c_i$ :　Gewichtungsfaktor für das Zentrum i.

In dieser Darstellung weist die radiale Basisfunktion $h_i$ einen Index i auf, weil die radiale Basisfunktion $h_i$ jeweils für ein zugeordnetes Zentrum i unterschiedliche Charakteristika, wie beispielsweise eine Breite oder eine Varianz einer Gaußfunktion, aufweist.

Ferner ist aus [4] ein Verfahren zu einem Training eines RBF-Netzes bekannt.

Das aus [1] bekannte RBF-Netz vom Typ Multi Adaline weist anstelle des Gewichtungsfaktors $c_i$ ein sogenanntes lineares Adaline actk auf und läßt sich wie folgt beschreiben:

$$y = \sum_{k=1}^{nk} \chi_k * act_k \qquad\qquad (4)$$

wobei:

$$act_k = \sum_{i=1}^{ni} (x_i - \mu_{i,k}) * a_{i,k} + b_k \qquad\qquad (5)$$

$$\chi_k = \frac{g_k}{\sum_{k=1}^{nk} g_k} \qquad\qquad (6)$$

$$g_k = \exp\left(- \frac{1}{2 * \sigma_k^2} * \sum_{i=1}^{ni} (x_i - \mu_{i,k})^2\right) \qquad\qquad (7)$$

mit:

i,k     Laufvariable

nk     Zahl der Zentren

ni     Wert der Dimensionalität eines Eingangsraums

$a_{i,k}$     Steigung

$b_k$     Biaswert

$\chi_k$     Partitionsfunktion

$\mu_{i,k}$     Zentrum

$x_{i,y}$     Eingangsgröße, Ausgangsgröße

$\sigma_k$     Varianz

Aus [2] und [3] ist ein sogenanntes Fuzzy-Clustering-Verfahren zur Datenanalyse bekannt.

Im Rahmen des Fuzzy-Clusterings werden c Cluster und entsprechende Zugehörigkeiten von Datenvektoren $\underline{x}_k$ derart bestimmt, daß Datenvektoren, die in einem Datenraum nahe bei einem Cluster liegen, eine möglichst hohe Zugehörigkeit und weit von dem Cluster entfernt liegende Datenvektoren $\underline{x}_k$ eine möglichst geringe Zugehörigkeit zu dem jeweiligen Cluster aufweisen.

Dies wird durch Minimierung einer Summe der mit Zugehörigkeiten $u_{ik}^m$ gewichteten quadratischen euklidischen Abständen $d_{ik}^2$ erreicht. Es soll also eine Menge X von Datenvektoren $\underline{x}_k$

$$X = \{\underline{x}_1, \underline{x}_2, ..., \underline{x}_k, ..., \underline{x}_n\}$$

in c Cluster (Untermengen der Menge von Datenvektoren) gruppiert werden.

Die Cluster werden beschrieben durch eine Zugehörigkeitsmatrix $\underline{U}$, welche c Zeilen und n Spalten aufweist. Jedes Element $u_{ik}$ der Zugehörigkeitsmatrix $\underline{U}$ weist einen Wert innerhalb des Intervalls [0, 1] auf und beschreibt eine Zugehörigkeit des Datenvektors $\underline{x}_k$ zu dem i-ten Cluster.

Die Summe der Zugehörigkeiten des Datenvektors $\underline{x}_k$ in den c Clustern muß folgender Vorschrift genügen:

$$\sum_{i=1}^{c} u_{ik} = 1 \qquad \forall k = 1..n. \qquad (8)$$

Ein Cluster muß mindestens ein Element enthalten, so daß gilt:

$$\sum_{k=1}^{n} u_{ik} > 0 \qquad \forall i = 1..c. \qquad (9)$$

Die Kostenfunktion $J_m$ der Zugehörigkeitswerte wird gemäß folgender Vorschrift gebildet:

$$J_m = \sum_{i=1}^{c} \sum_{k=1}^{n} u_{ik}^m \cdot d_{ik}^2 \cdot \qquad (10)$$

Ein Abstand $d_{ik}$ wird gebildet gemäß folgender Vorschrift:

$$d_{ik} = \left\| \underline{x}_k - \underline{v}_i \right\|_A = \sqrt{\left( \underline{x}_k - \underline{v}_i \right)^T \cdot \underline{A} \cdot \left( \underline{x}_k - \underline{v}_i \right)} \cdot \qquad (11)$$

Es wird mit $\underline{A}$ eine vorgebbare induzierte Norm des inneren Produkts gemäß Vorschrift (4) bezeichnet, die üblicherweise durch die Identitätsmatrix gegeben ist (Euklidischer Abstand).

Die Minimierung der Kostenfunktion $J_m$ erfolgt unter Einsatz einer sogenannten Picard-Iteration.

Nacheinander werden Zugehörigkeitswerte $u_{ik}$ und Clusterzentren $\underline{v}_i$ gemäß folgenden Vorschriften gebildet:

$$u_{ik} = \frac{1}{\sum_{j=1}^{c} \left( \dfrac{d_{ik}}{d_{jk}} \right)^{\frac{2}{m-1}}}, \qquad (12)$$

$$\underline{v}_i = \frac{\sum\limits_{k=1}^{n} u_{ik}^m \cdot \underline{x}_k}{\sum\limits_{k=1}^{n} u_{ik}^m} . \tag{13}$$

Die Ermittlung der Zugehörigkeitswerte $u_{ik}$ und der Clusterzentren $\underline{v}_i$ wird solange wiederholt, bis eine festgelegte Anzahl von Iterationen durchgeführt worden ist oder bis eine Änderung der Zugehörigkeitswerte $u_{ik}$ und/oder bis eine Änderung der Clusterzentren $\underline{v}_i$ unter einem vorgegebenen Schwellenwert liegt.

Bei diesem oben beschriebenen, auch als Fuzzy-C-Means-Clustering bezeichneten Verfahren werden die Cluster durch ihre Clusterzentren $\underline{v}_i$ beschrieben.

Eine Abbildung, die durch eine bekannte Abbildungsvorschrift ein Systemverhalten eines technischen Systems bzw. Prozesses beschreibt, weist in vielen Fällen den Nachteil auf, daß die Abbildung mangelhaft stabil gegenüber einem fehlerhaften Datenpunkt oder Meßfehler ist.

Der Erfindung liegt das Problem zugrunde, ein Verfahren und eine Anordnung zur Ermittlung einer Abbildungsvorschrift einer Abbildung, welche einen technischen Prozeß beschreibt, anzugeben, mit welchen die Abbildung hinsichtlich der Stabilität gegenüber einem fehlerhaften Datenpunkt verbessert wird.

Das Problem wird durch das Verfahren sowie durch die Anordnung mit den Merkmalen gemäß den unabhängigen Patentansprüchen gelöst.

Bei einem Verfahren zur rechnergestützten Ermittlung einer Abbildungsvorschrift, welche einen technischen Prozeß in einem vorgegeben Raum beschreibt, wobei der technische Prozeß in dem vorgegebenen Raum durch Teilmodelle beschrieben wird, wird eine approximative Abbildungsvorschrift, welche den technischen Prozeß approximativ beschreibt und welche erste Teilmodelle umfaßt, ermittelt. Anschließend wird die Abbildungsvorschrift derart ermittelt, daß die ersten Teilmodelle mit mindestens einem zweiten Teilmodell durch eine Verknüpfung der ersten Teilmodelle mit dem zweiten Teilmodell erweitert werden, wobei die Abbildungsvorschrift im Vergleich zu der approximativen Abbildungsvorschrift dadurch stabilisiert wird, daß das zweite Teilmodell den technischen Prozeß in dem vorgegebenen Raum besser beschreibt als die approximative Abbildungsvorschrift.

Eine Anordnung zur rechnergestützten Ermittlung einer Abbildungsvorschrift, welche einen technischen Prozeß in einem vorgegeben Raum beschreibt, wobei der technische Prozeß in dem vorgegebenen Raum durch Teilmodelle beschrieben wird, weist einen Prozessor auf, der derart eingerichtet ist, daß eine approximative Abbildungsvorschrift, welche den technischen Prozeß approximativ beschreibt und welche erste Teilmodelle umfaßt, ermittelbar ist. Ferner ist der Prozessor derart eingerichtet, daß anschließend die Abbildungsvorschrift derart ermittelbar ist, daß die ersten Teilmodelle mit mindestens einem zweiten Teilmodell durch eine Verknüpfung der ersten Teilmodelle mit dem zweiten Teilmodell erweitert werden, wobei die Abbildungsvorschrift im Vergleich zu der approximativen Abbildungsvorschrift dadurch stabilisiert wird, daß das zweite Teilmodell den technischen Prozeß in dem vorgegebenen Raum besser beschreibt als die approximative Abbildungsvorschrift.

Diese Anordnung ist insbesondere geeignet zur Durchführung des erfindungsgemäßen Verfahrens oder einer seiner nachfolgend erläuterten Weiterbildungen.

Der besondere Vorteil der Erfindung liegt darin, daß die Stabilität der Abbildung gegenüber einem fehlerhaften Datenpunkt erheblich verbessert wird. Gerade durch die Überlagerung der ersten Teilmodelle mit dem zweiten Teilmodell wird eine Instabilität einer Abbildung, welche Abbildung nur erste Teilmodelle aufweist, und welche Instabilität insbesondere in einem Bereich in dem vorgegebenen Raum, der nur eine geringe Dichte von vorgegebenen Trainingsdatenpunkten aufweist, reduziert. Des Weiteren wird durch diese Vorgehensweise auch eine Genauigkeit der Beschreibung des technischen Prozesses durch die Abbildungsvorschrift verbessert.

Bevorzugte Weiterbildungen der Erfindung ergeben sich aus den abhängigen Ansprüchen.

Bevorzugt wird die Abbildungsvorschrift mit mehreren zweiten Teilmodellen erweitert und/oder das zweite Teilmodell mit mehreren ersten Teilmodellen überlagert.

Bei der Beschreibung komplexer technischer Prozesse sind/ist die Ausgangsgröße und/oder die Eingangsgröße mehrdimensionale/ein mehrdimensionale Größen/Größe.

Eine weitere Verbesserung der Beschreibung wird dadurch erreicht, daß die Überlagerung des zweiten Teilmodells unter Verwendung einer Gewichtungsfunktion durchgeführt wird.

In einer Weiterbildung wird die Gewichtungsfunktion unter Verwendung einer Summe von Gewichtungen ermittelt.

Bevorzugt wird die Abbildungsvorschrift im Rahmen eines neuronalen Netzes verwendet.

In einer Weiterbildung sind/ist das neuronale Netz und/oder das zweite Teilmodell vom Typ Multi Adaline.

Bevorzugt wird die Abbildungsvorschrift wie folgt beschrieben:

$$y = \sum_{k=0}^{nk} \chi_k * act_k \qquad (14)$$

wobei:

$$act_k = (x - \mu_k) * a_k + b_k \qquad (15)$$

$$\chi_k = \frac{g_k}{\displaystyle\sum_{k=0}^{nk} g_k} = \frac{g_k}{g_0 + \displaystyle\sum_{k=1}^{nk} g_k} = \frac{g_k}{g_0 + SG} \qquad (16)$$

$$g_k = \exp\left(-\frac{1}{2*\sigma_k^2} * (x - \mu_k)^2\right) \qquad (17)$$

$$SG = \sum_{k=1}^{nk} g_k \qquad (18)$$

mit:

| | |
|---|---|
| x,y | Eingangsgröße, Ausgangsgröße |
| k | Laufvariable |
| nk | Zahl der Clusterzentren der ersten Teilmodelle |
| $a_k$ | Steigung |
| $b_k$ | Biaswert |
| SG | Summe von Gewichtungen |
| $g_k, g_0$ | Gewichtungsfunktionen |
| $\chi_k$ | Partitionsfunktion |
| $act_k$ | lineares Adaline |
| $\mu_k$ | Clusterzentrum |
| $\sigma_k$ | Varianz |

Bevorzugt sind/ist die Ausgangsgröße und/oder die Eingangsgröße eine Prozeßgröße und/oder eine Steuergröße einer technischen Anlage.

Einer Weiterbildung wird zur Überwachung und/oder Regelung einer technischen Anlage eingesetzt.

Bevorzugt ist die technische Anlage eine Stahlwalzanlage.

Eine vorteilhafte Weiterbildung wird im Rahmen eines Trainings eines neuronalen Netzes eingesetzt. Von besonderem Vorteil ist es, eine Weiterbildung bei einem Online-Lernen des neuronalen Netzes einzusetzen. Damit wird die Stabilität der Abbildung des technischen Prozesses im Betrieb des technischen Prozesses weiter verbessert. Dies ist dadurch möglich, daß bei dem Online-Lernen die Beschreibung des technischen Prozesses im Betrieb des technischen Prozesses an ein sich änderndes Systemverhalten angepaßt wird.

Ausführungsbeispiele der Erfindung sind in Figuren dargestellt und werden im weiteren näher erläutert.

Es zeigen:

Figur 1    Schematische Darstellung von Komponenten einer durch ein neuronales Netz bzw. ein Fuzzy-System überwachten und gesteuerten Stahlwalzanlage

Figur 2    Verfahrensschritte für ein Training des neuronalen Netzes bzw. Fuzzy-Systems

Figur 3    Darstellung eines Abbildungsverhalten eines neuronalen Netzes

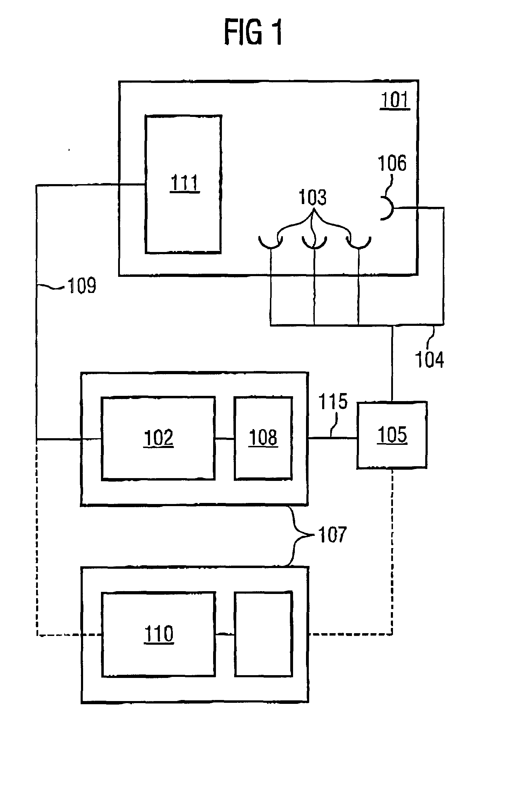

In Figur 1 sind schematisch Komponenten einer unter Verwendung eines neuronalen Netzes überwachten und gesteuerten Stahlwalzanlage zu einer Stahlverarbeitung dargestellt.

Figur 1 zeigt ein System der Stahlwalzanlage 101 zur Stahlverarbeitung (Walzprozeß). Das System der Stahlwalzanlage 101 wird unter Verwendung eines neuronalen Netzes 102 überwacht und gesteuert. Ein Systemverhalten der Stahlwalzanlage 101 wird durch das neuronale Netzes 102, welches vom Typ Radiale-Basisfunktionen-Netz ist, beschrieben.

Anstelle des neuronalen Netzes 102 kann auch ein Fuzzy-System 110 für die Überwachung und die Steuerung der Stahlwalzanlage 101 eingesetzt werden.

Ferner sind geeignete Meßmittel 103, beispielsweise Sensoren 103, dargestellt, mit denen Prozeßgrößen, die den Prozeß der Stahlverarbeitung beeinflussen, gemessen werden. Die Meßmittel 103 sind über einem Bus 104 mit einem Speicher 105 verbunden. Zu vorgebbaren Zeitpunkten werden die Prozeßgrößen gemessen und in dem Speicher 105 gespeichert.

Die gemessenen Prozeßgrößen sind chemische Prozeßgrößen, wie beispielsweise eine Kohlenstoffkonzentration oder eine Mangankonzentration, eine Endbandtemperatur eines gewalzten Stahlbandes, eine Endbanddicke des gewalzten Stahlbandes sowie eine Walzengeschwindigkeit.

Ferner ist ein weiteres Meßmittel 106 dargestellt, mit dem eine weitere Prozeßgröße, eine Walzkraft, die eine zu überwachende Größe und eine Steuergröße des Prozesses bzw. des Systems der Stahlwalzanlage 101 ist, gemessen wird. Das weitere Meßmittel 106 ist ebenfalls über den Bus 104 mit dem Speicher 105 verbunden. Die weitere Prozeßgröße wird ebenfalls an dem System Stahlwalzanlage 101 zu den vorgebbaren Zeitpunkten gemessen und in dem Speicher 105 gespeichert.

Der Speicher 105 ist über einen weiteren Bus 115 mit einer Verarbeitungseinheit 107, die einen Prozessor 108 aufweist, beispielsweise ein Rechner, verbunden. Das neuronale Netz 102 bzw. das Fuzzy-System 110 ist in Form von Software in der Verarbeitungseinheit 107 gespeichert. Der Prozessor 108 führt die Software aus.

Die Walzkraft ist eine Ausgangsgröße des neuronalen Netzes 102 bzw. des Fuzzy-Systems 110, welches das Systemverhalten der Stahlwalzanlage 101 beschreibt. Die Walzkraft wird aus Eingangsgrößen, die an das neuronale Netz 101 bzw. an das Fuzzy-System 110 angelegt werden, wobei das neuronale Netz 101 bzw. das Fuzzy-System 110 ein vorgebbares Abbildungsverhalten aufweist, bestimmt wird.

Für die Bestimmung der Eingangsgrößen des neuronalen Netzes 102 bzw. des Fuzzy-Systems 110 werden aus den gemessenen Prozeßgrößen solche Prozeßgrößen ausgewählt, die den Prozeß der Stahlverarbeitung maßgeblich beeinflussen. Der Einfluß jeweils einer Prozeßgröße auf den Prozeß wird durch eine Sensivitätsanalyse bestimmt. Es werden folgende Eingangsgrößen ausgewählt:

- Kohlenstoffkonzentration des verarbeiteten Stahls
- Mangankonzentration des verarbeiteten Stahls
- Endbandtemperatur eines gewalzten Stahlbandes
- Endbanddicke des gewalzten Stahlbandes
- Walzengeschwindigkeit einer Stahlwalze

Die Eingangsgrößen werden an das neuronale Netz 102 bzw. an das Fuzzy-System 110 angelegt. Das neuronale Netz 102 bzw. das Fuzzy-System 110 bestimmt unter Verwendung der Eingangsgrößen die Ausgangsgröße Walzkraft. Die Ausgangsgröße wird an dem neuronalen Netz 102 bzw. an dem Fuzzy-System 110 mittels eines Mittels 108 abgegriffen und über eine Datenleitung 109, welche das neuronale Netz 102 bzw. das Fuzzy-System 110 mit dem System der Stahlwalzanlage 101 verbindet, an das System der Stahlwalzanlage 101 übertragen.

Unter Verwendung der Ausgangsgröße Walzkraft wird das System Stahlwalzanlage 101 unter Verwendung geeigneter Mittel 111 überwacht und gesteuert, wobei durch eine geeignete Einstellung der Walzkraft eine vorgegebene Endbanddicke des Stahlbandes erzeugt wird.

Die einzustellende Walzkraft wird unter Verwendung des neuronalen Netzes 102 bzw. des Fuzzy-Systems 110 für eine vorgegebene Endbanddicke des Stahlbandes bestimmt.

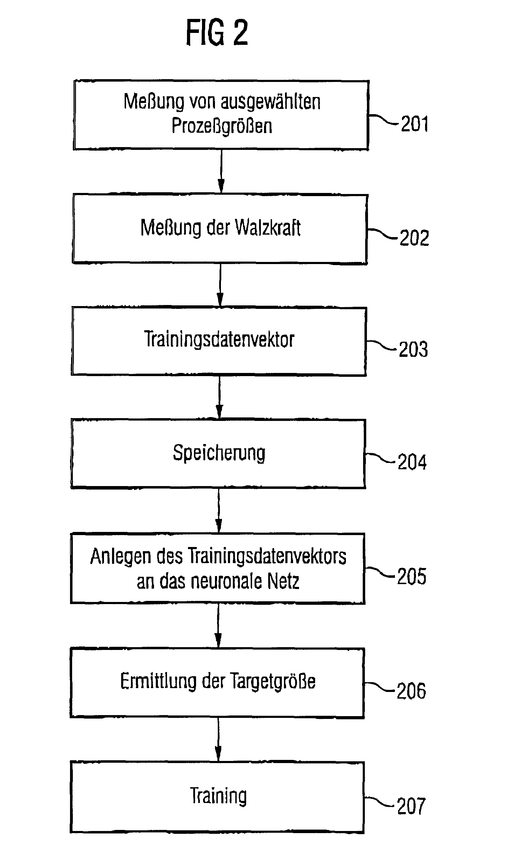

Figur 2 zeigt Verfahrensschritte, die im Rahmen eines Trainings des neuronalen Netzes, mit welchem Training ein vorgebbares Abbildungsverhalten bestimmt wird, durchgeführt werden.

Die Verfahrensschritte werden entsprechend bei dem Fuzzy-Systems durchgeführt.

Für das Training des neuronalen Netzes werden Trainingsdaten derart ermittelt, daß die ausgewählten Prozeßgrößen 201 und die Walzkraft 202 an der Stahlwalzanlage zu vorgebbaren Zeitpunkten gemessen, jeweils für einen Zeitpunkt als ein Trainingsdatenvektor 203 zusammengefaßt und in dem Speicher gespeichert werden 204.

Die Trainingsdatenvektoren werden an das neuronale Netz angelegt 205.

Als eine Targetgröße für das Training des neuronalen Netzes wird ein unter Verwendung der Ausgangsgröße Walzkraft bestimmter sogenannter Walzkraftkorrekturfaktor ermittelt 206.

Unter Verwendung der Trainingsdatenvektoren und der Targetgröße wird das neuronale Netz mit einem bekannten Trainingsverfahren, wie es in [1] beschrieben ist, trainiert 207.

Das Training des neuronalen Netzes wird bevorzugt im Betrieb der Stahlwalzanlage durchgeführt, wobei die Trainingsdaten im Betrieb der Stahlwalzanlage gemessen werden und damit auch Anwendungsdaten für das neuronale Netz sind. Ein derartiges Training wird als ein sogenanntes Online-Training bezeichnet.

Das Online-Training weist den Vorteil auf, daß eine Änderung in dem Systemverhalten der Stahlwalzanlage ohne große Zeitverzögerung in dem Abbildungsverhalten des neuronalen Netzes berücksichtigt wird. Eine solche Änderung kann beispielsweise durch eine Abnutzung von einer Komponente der Stahlwalzanlage verursacht werden.

Im folgenden wird ein Abbildungsverhalten eines neuronalen Netzes, wie es für eine Überwachung und ein Steuerung eines Systems eines technischen Systems, beispielsweise das oben beschriebene System der Stahlwalzanlage, eingesetzt wird, näher beschrieben.

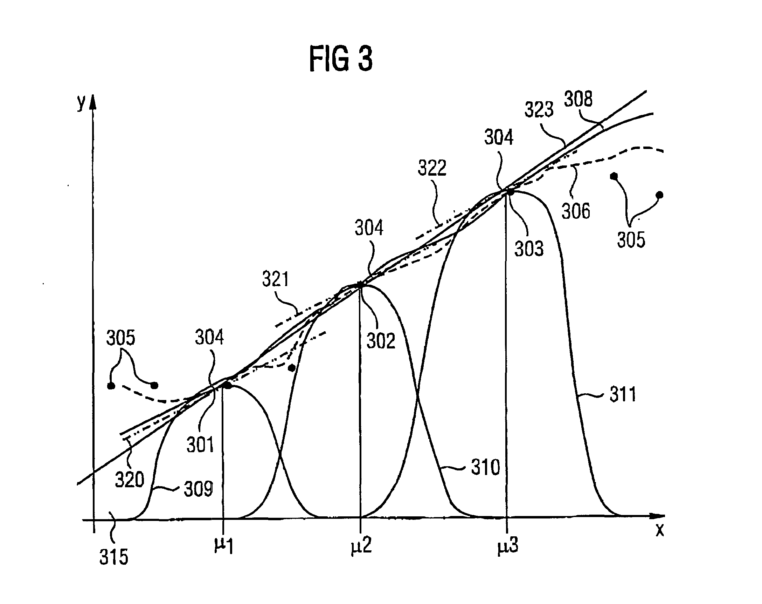

Figur 3 zeigt in einer vereinfachten Darstellung eine Abbildung durch ein neuronales Netz.

Für die vereinfachte Darstellung wird ein eindimensionaler Eingangsraum (x) als ein Eingangsraum des neuronalen Netzes mit einer eindimensionalen Eingangsgröße x verwendet. Im Allgemeinen wird eine Dimension des Eingangsraums durch eine Anzahl von Eingangsgrößen bestimmt. Das oben beschriebene neuronale Netz zur Überwachung und Steuerung der Stahlwalzanlage weist beispielsweise einen mehrdimensionalen Eingangsraum auf. Die Ausgangsgröße des neuronalen Netzes ist eine eindimensionale Ausgangsgröße y. Damit erfolgt durch das neuronale Netz, das ein Systemverhalten eines technischen Systems beschreibt, eine Abbildung der Eingangsgröße $x_i$ auf die Ausgangsgröße y in einem Zustandsraum (x,y) 315.

Figur 3 zeigt den Zustandsraum (x,y) 315, in dem das Systemverhalten des Prozesses durch sogenannte Arbeitspunkte 304 des Prozesses beschrieben ist.

In Figur 3 sind weitere Arbeitspunkte 305 dargestellt, die fehlerhafte Arbeitspunkte 305 sind, wie sie beispielsweise durch eine falsche Messung von Prozeßgrößen auftreten können.

Liegen die fehlerhaften Arbeitspunkte 305 in einem Bereich in dem Zustandsraum (x,y) 315, in dem eine Dichte der Arbeitspunkte 304 gering ist, so wird durch ein Training des neuronalen Netzes, welches nur erste Teilmodelle umfaßt, eine Abbildungvorschrift bzw. eine Abbildung 306 derart falsch bestimmt, daß die Abbildungsvorschrift bzw. die Abbildung 306 für Datenpunkte in dem Bereich instabil ist. Des Weiteren beschreibt die Abbildungsvorschrift bzw. die Abbildung 306 den technischen Prozeß in dem Bereich in dem Zustandsraum (x,y) 315 nicht mit einer ausreichender Genauigkeit.

Ferner sind in Figur 3 die drei ersten Teilmodelle durch jeweils ein einem ersten Teilmodell zugeordneten Clusterzentrum $\mu_k$ 301, 302, 303, jeweils einer einem ersten Teilmodell zugeordneten Partitionsfunktion $\chi_k$ 309, 310, 311 und jeweils ein einem ersten Teilmodell zugeordneten lineares Adaline $act_k$ 320, 321, 322 dargestellt.

Das Clusterzentrum $\mu_k$ 301, 302, 303 wird durch ein Clusteringverfahren, wie es in [2] und [3] beschrieben ist, bestimmt.

Die Stabilität der Abbildung und damit auch die Genauigkeit der Beschreibung des technischen Prozesses werden dadurch verbessert, daß die ersten Teilmodelle mit einem zweiten Teilmodell überlagert werden. Die verbesserte Beschreibung 308 ist ebenfalls in der Figur 3 dargestellt.

Das zweite Teilmodell umfaßt ein globales lineares Adaline $act_0$ 323 mit einem Zentrum $\mu_0 = 0$.

Das neuronale Netz, welches ein Radiale-Basisfunktionen-Netz vom Typ Multi Adaline, wie es in [1] beschrieben ist, ist, läßt sich unter Berücksichtigung der Überlagerung mit dem zweiten Teilmodell wie folgt darstellen:

$$y = \sum_{k=0}^{nk} \chi_k * act_k \qquad\qquad (14)$$

wobei:

$$act_k = (x - \mu_k) * a_k + b_k \qquad\qquad (15)$$

$$\chi_k = \frac{g_k}{\sum\limits_{k=0}^{nk} g_k} = \frac{g_k}{g_0 + \sum\limits_{k=1}^{nk} g_k} = \frac{g_k}{g_0 + SG} \tag{16}$$

$$g_k = \exp\left(-\frac{1}{2 * \sigma_k^2} * (x - \mu_k)^2\right) \tag{17}$$

$$SG = \sum_{k=1}^{nk} g_k \tag{18}$$

mit:

| | |
|---|---|
| x,y | Eingangsgröße, Ausgangsgröße |
| k | Laufvariable |
| nk | Zahl der Clusterzentren der ersten Teilmodelle |
| $a_k$ | Steigung |
| $b_k$ | Biaswert |
| SG | Summe von Gewichtungen |
| $g_k$, $g_0$ | Gewichtungsfunktionen |
| $\chi k$ | Partitionsfunktion |
| $act_k$ | lineares Adaline |
| $\mu_k$ | Clusterzentrum |
| $\sigma_k$ | Varianz |

Die Summe von den Gewichtungen ist ein Maß für eine Zugehörigkeit eines ausgewählten Datenpunkts zu den ersten Teilmodelle. Kleine Werte von SG für einen ausgewählten Datenpunkt bedeuten, daß der ausgewählte Datenpunkt durch kein Clusterzentrum repräsentiert wird, wie beispielsweise die falschen Arbeitspunkte 305. Große Werte von SG für einen ausgewählten Datenpunkt bedeuten, daß der ausgewählte Datenpunkt einen geringen Abstand in dem Zustandsraum (x,y) 315 von einem der Clusterzentren 301, 302, 303 aufweist.

Die Zugehörigkeitsfunktion g0 des zweiten Teilmodell ist eine Konstante. Die Konstante wird derart gewählt, daß folgende Abschätzungen gelten:

Für große Werte von SG:

$\chi k \cong \chi 1$ (für die ersten Teilmodelle, 1'$\leq$ 1 $\leq$ 3)
$g_0$ << SG

Für kleine Werte von SG:

$\chi l \cong 0$ (für die ersten Teilmodelle, 1 $\leq$ 1 $\leq$ 3)
$\chi 0 \cong 1$
$g_0$ >> SG

Die Konstante $g_0$ wird in Abhängigkeit einer gegebenen Verteilung von SG gewählt. Absolute Werte von SG und die Verteilung von SG hängen von einer Datenverteilung in dem Zustandsraum (x,y) 315, einer Normierung, einer Lage und der Anzahl der Clusterzentren $\mu_h$ 301, 302, 303 und einem Smoothing-Wert ab. Die Wahl der Konstante erfolgt durch eine Optimierung der Verteilung von SG. Beispielsweise wird $g_0$ = 0.25 gewählt.

Die beschriebene Abbildung durch das neuronale Netz wird als ein Sourcecode in einer C/C++ Bibliothek mit einer Schnittstelle zu MATLAB in einer Verarbeitungseinheit, beispielsweise ein Rechner mit einem Prozessor, implementiert.

Im folgenden werden Alternativen des Ausführungsbeispiels dargestellt.

Eine Überlagerung der ersten und der zweiten Teilmodelle kann auch derart erfolgen, daß jeweils ein erstes Teilmodell mit einem zugeordneten zweiten Teilmodell überlagert wird. Dabei können die zweiten Teilmodelle vom Typ lineares Adaline sein. Die Überlagerung kann, wie beschrieben, unter Verwendung der Summe der Gewichte erfolgen.

Ebenso kann eine Überlagerung derart ausgestaltet sein, daß die ersten Teilmodelle mit einem zweiten Teilmodell und zugleich jeweils ein ersten Teilmodell mit einem zugeordneten weiteren zweiten Teilmodell überlagert wird.

Das zweite Teilmodell kann auch vom Typ Polynom sein. Ferner kann das zweite Teilmodell ein analytisches Modell, welches den technischen Prozeß oder Teile des technischen Prozesses beschreibt, oder eine andere Form von Vorwissen sein.

Die Abbildung kann auch durch ein Fuzzy-System beschrieben werden. Die oben beschriebene Zusammenhänge gelten entsprechend für das Fuzzy-System.

Anstelle des im Ausführungsbeispiel beschriebenen Fuzzy-Clustering-Verfahrens kann das Clustering unter Verwendung eines K-Means-Verfahrens (KM) oder durch ein Neural-Gas-Verfahren (NG) erfolgen.

Ferner kann die Erfindung, die bei dem beschriebenen Ausführungsbeispiel für eine Überwachung und eine Steuerung einer Stahlwalzanlage eingesetzt wird, auch für die Überwachung und Steuerung eines beliebigen technischen Systems, wie beispielsweise eine Papierwickelvorrichtung oder eine Kläranlage eingesetzt werden.

Im Rahmen dieses Dokuments wurden folgende Veröffentlichungen zitiert:

[1] O. Nelles, LOLIMOT - Lokale, lineare Modelle zur Identifikation nichtlinearer, dynamischer Systeme, in: Automatisierungstechnik, Bd. 45 (1997), S. 163 - 174, R. Oldenbourg Verlag, 1997

[2] J. Hollatz und T. Runkler, Datenanalyse und Regelerzeugung mit Fuzzy-Clustering, Fuzzy-Systeme in Theorie und Anwendungen, in: Hellendoorn Adamy Prehn Wegmann und Linzenkirchner, Kapitel 5.6, Siemens AG, Nürnberg, 1997

[3] J. C. Bezdek et al, Detection and Characterization of Cluster Substructure, II. Fuzzy c Varieties and Convex Combinations thereof SIAM Journal on Applied Mathematics, Volume 40, No. 2, Seite 358-370, 1981

[4] A. Zell, Simulation Neuronaler Netze, S. 225-240, Addison-Wesley Publishing Company, 1994

**Patentansprüche**

1. Verfahren zur rechnergestützten Ermittlung einer Abbildungsvorschrift, welche einen technischen Prozeß in einem vorgegebenen Raum beschreibt, wobei der technische Prozeß in dem vorgegebenen Raum durch Teilmodelle beschrieben wird,
   **dadurch gekennzeichnet, daß**

   - eine approximative Abbildungsvorschrift, welche den technischen Prozeß approximativ beschreibt und welche erste Teilmodelle umfaßt, ermittelt wird, und
   - anschließend die Abbildungsvorschrift derart ermittelt wird, daß die ersten Teilmodelle mit mindestens einem zweiten Teilmodell durch eine Verknüpfung der ersten Teilmodelle mit dem zweiten Teilmodell erweitert werden, wobei die Abbildungsvorschrift im Vergleich zu der approximativen Abbildungsvorschrift dadurch stabilisiert wird, daß das zweite Teilmodell den technischen Prozeß zumindest in einem Teil des vorgegebenen Raums besser beschreibt als die approximative Abbildungsvorschrift.

2. Verfahren nach Anspruch 1,
   **dadurch gekennzeichnet, daß** die Abbildungsvorschrift mit mehreren zweiten Teilmodellen erweitert wird.

3. Verfahren nach Anspruch 1 oder 2,
   **dadurch gekennzeichnet, daß** das zweite Teilmodell mit mehreren ersten Teilmodellen überlagert wird.

4. Verfahren nach einem der Ansprüche 1 bis 3,
   **dadurch gekennzeichnet, daß** die Ausgangsgröße und/oder die Eingangsgröße mehrdimensionale Größen sind/ ist.

5. Verfahren nach einem der Ansprüche 1 bis 4,
   **dadurch gekennzeichnet, daß** die Überlagerung des zweiten Teilmodells unter Verwendung einer Gewichtungsfunktion durchgeführt wird.

**6.** Verfahren nach einem der Ansprüche 1 bis 5,
**dadurch gekennzeichnet**, **da**ß die Gewichtungsfunktion unter Verwendung einer Summe von Gewichtungen ermittelt wird.

**7.** Verfahren nach einem der Ansprüche 1 bis 6,
**dadurch gekennzeichnet, da**ß die Abbildungsvorschrift im Rahmen eines neuronalen Netzes verwendet wird.

**8.** Verfahren nach einem der Ansprüche 1 bis 7,
**dadurch gekennzeichnet**, **da**ß das neuronale Netz vom Typ Multi Adaline ist.

**9.** Verfahren nach einem der Ansprüche 1 bis 8,
**dadurch gekennzeichnet**, **da**ß das zweite Teilmodell vom Typ Adaline ist.

**10.** Verfahren nach einem der Ansprüche 1 bis 9,
**dadurch gekennzeichnet**; **da**ß die Abbildungsvorschrift wie folgt beschrieben wird:

$$y = \sum_{k=0}^{nk} \chi_k * act_k \qquad (14)$$

wobei:

$$act_k = (x - \mu_k) * a_k + b_k \qquad (15)$$

$$\chi_k = \frac{g_k}{\displaystyle\sum_{k=0}^{nk} g_k} = \frac{g_k}{g_0 + \displaystyle\sum_{k=1}^{nk} g_k} = \frac{g_k}{g_0 + SG} \qquad (16)$$

$$g_k = \exp\left(-\frac{1}{2 * \sigma_k^2} * (x - \mu_k)^2\right) \qquad (17)$$

$$SG = \sum_{k=1}^{nk} g_k \qquad (18)$$

mit:

| | |
|---|---|
| x,y | Eingangsgröße, Ausgangsgröße |
| k | Laufvariable |
| nk | Zahl der Clusterzentren der ersten Teilmodelle |
| $a_k$ | Steigung |
| $b_k$ | Biaswert |
| SG | Summe von Gewichtungen |
| $g_k, g_0$ | Gewichtungsfunktionen |
| $\chi_k$ | Partitionsfunktion |
| $act_k$ | lineares Adaline |
| $\mu_k$ | Clusterzentrum |
| $\sigma_k$ | Varianz |

**11.** Verfahren nach einem der Ansprüche 1 bis 10,
**dadurch gekennzeichnet**, **da**ß die Ausgangsgröße und/oder die Eingangsgröße eine Prozeßgröße und/oder eine Steuergröße einer technischen Anlage sind/ist.

**12.** Verfahren nach einem der Ansprüche 1 bis 11, **gekennzeichnet durch** den Einsatz zur Überwachung und/oder Regelung einer technischen Anlage derart, daß eine Ausgangsgröße der Abbildungsvorschrift zur Überwachung und/oder Regelung verwendet wird.

**13.** Verfahren nach Anspruch 12,
**gekennzeichnet durch** den Einsatz zur Überwachung und/oder Regelung einer Stahlwalzanlage derart, daß eine Ausgangsgröße der Abbildungsvorschrift zur Überwachung und/oder Regelung verwendet wird.

**14.** Verfahren nach einem der Ansprüche 1 bis 13, **gekennzeichnet durch** den Einsatz im Rahmen eines Trainings und/oder eines on-line Lernens des neuronalen Netzes, wobei Parameter der Abbildungsvorschrift bei dem Training und/oder bei dem on-line Lernen angepaßt werden.

**15.** Anordnung zur rechnergestützten Ermittlung einer Abbildungsvorschrift, welche einen technischen Prozeß in einem vorgegebenen Raum beschreibt, wobei der technische Prozeß in dem vorgegebenen Raum durch Teilmodelle beschrieben wird,
**dadurch gekennzeichnet, daß** die Anordnung einen Prozessor aufweist, der folgende Mittel enthält :

- Mittel zur Ermittlung eine approximativen Abbildungsvorschrift, welche den technischen Prozeß approximativ beschreibt und welche erste Teilmodelle umfaßt, und
- Mittel zur Erweiterung der ersten Teilmodelle mit mindestens einem zweiten Teilmodell durch eine Verknüpfung der ersten Teilmodelle mit dem zweiten Teilmodell; Mittel zur Stabilizierung der Abbildungsvorschrift im Vergleich zu der approximativen Abbildungsvorschrift, daß das zweite Teilmodell den technischen Prozeß zumindest in einem Teil des vorgegebenen Raums besser beschreibt als die approximative Abbildungsvorschrift.

**16.** Anordnung nach Anspruch 15,
**dadurch gekennzeichnet, daß** die ersten Teilmodelle mit mehreren zweiten Teilmodellen erweiterbar sind.

**17.** Anordnung nach Anspruch 15 oder 16,
**dadurch gekennzeichnet**, **da**ß das zweite Teilmodell mit mehreren ersten Teilmodellen überlagerbar ist.

**18.** Anordnung nach einem der Ansprüche 15 bis 17,
**dadurch gekennzeichnet**, **da**ß die Ausgangsgröße und/oder die Eingangsgröße mehrdimensionale Größen sind/ist.

**19.** Anordnung nach einem der Ansprüche 15 bis 18,
**dadurch gekennzeichnet, daß** die Abbildungsvorschrift ein neuronales Netz beschreibt.

**20.** Anordnung nach einem der Ansprüche 15 bis 19,
**dadurch gekennzeichnet**, **da**ß das neuronale Netz vom Typ Multi Adaline ist.

**21.** Anordnung nach einem der Ansprüche 15 bis 20,
**dadurch gekennzeichnet, da**ß das zweite Teilmodell vom Typ Adaline ist.

**22.** Anordnung nach einem der Ansprüche 15 bis 21,
**dadurch gekennzeichnet**, **da**ß die Ausgangsgröße und/oder die Eingangsgröße eine Prozeßgröße und/oder eine Steuergröße einer technischen Anlage sind/ist.

**23.** Anordnung nach einem der Ansprüche 15 bis 22, die Mittel zur Verwendung einer Ausgangsgröße der Abbildungsvorschrift zur Überwachung und/oder Regelung einer technischen Anlage enthält

**24.** Anordnung nach Anspruch 23, die Mittel zur Verwendung einer Ausgangsgröße der Abbildungsvorschrift zur Überwachung und/oder Regelung einer Stahlwalzanlage enthält

**25.** Anordnung nach einem der Ansprüche 15 bis 24, die Mittel zur Anpassung der Parameter der Abbildungsvorschrift bei dem Training und/oder bei dem on-line Lernen im Rahmen eines Trainings und/oder eines on-line Lernens des neuronalen Netzes enthält.

**Claims**

1.  Method for computer-aided determination of a mapping rule, which describes a technical process in a predetermined space, with the technical process being described in the predetermined space by means of model elements, **characterized in that**

    -   an approximate mapping rule, which describes the technical process approximately and which comprises first model elements, is determined, and
    -   the mapping rule is then determined such that the first model elements have at least one second model element added to them by linking the first model elements to the second model element, with the mapping rule being stabilized in comparison to the approximate mapping rule **in that** the second model element describes the technical process better in at least a part of the determined space than the approximate mapping rule.

2.  Method according to Claim 1,
    **characterized in that** the mapping rule has a number of second model elements added to it.

3.  Method according to Claim 1 or 2,
    **characterized in that** a number of first model elements are superimposed on the second model element.

4.  Method according to one of Claims 1 to 3,
    **characterized in that** the output variable and/or the input variable are/is multi-dimensional variables/a multi-dimensional variable.

5.  Method according to one of Claims 1 to 4,
    **characterized in that** the superimposition of the second model element is carried out using a weighting function.

6.  Method according to one of Claims 1 to 5,
    **characterized in that** the weighting function is determined using a sum of weightings.

7.  Method according to one of Claims 1 to 6,
    **characterized in that** the mapping rule is used within a neural network.

8.  Method according to one of Claims 1 to 7,
    **characterized in that** the neural network is of the multi-adaline type.

9.  Method according to one of Claims 1 to 8,
    **characterized in that** the second model element is of the adaline type.

10. Method according to one of Claims 1 to 9,
    **characterized in that** the mapping rule is described as follows:

$$y = \sum_{k=0}^{nk} \chi k * act_k \qquad (14)$$

where :

$$act_k = (x - \mu_k) * a_k + b_k \qquad (15)$$

$$\chi_k = \frac{g_k}{\sum\limits_{k=1}^{nk} g_k} = \frac{g_k}{g_0 + \sum\limits_{k=1}^{nk} g_k} = \frac{g_k}{g_0 + SG} \qquad (16)$$

$$g_k = \exp\left(- \frac{1}{2 * \sigma_k^2} * (x - \mu_k)^2\right) \qquad (17)$$

$$SG = \sum\limits_{k=1}^{nk} g_k \qquad (18)$$

where:

| | |
|---|---|
| x, y | Input variable, output variable |
| k | Running variable |
| nk | Number of cluster centres in the first model elements |
| $a_k$ | Gradiant |
| $b_k$ | Bias value |
| SG | Sum of weightings |
| $g_k, g_0$ | Weighting functions |
| $\chi^k$ | Partition function |
| $act_k$ | Linear adaline |
| $\mu_k$ | Cluster centre |
| $\sigma_k$ | Variance |

**11.** Method according to one of Claims 1 to 10,
**characterized in that** the output variable and/or the input variable are/is a process variable and/or a control variable of a technical system.

**12.** Method according to one of Claims 1 to 11,
**characterized by** use for monitoring and/or control of a technical system, such that an output variable from the mapping rule is used for monitoring and/or control.

**13.** Method according to Claim 12,
**characterized by** use for monitoring and/or control of a steel rolling system, such that an output variable from the mapping rule is used for monitoring and/or control.

**14.** Method according to one of Claims 1 to 13,
**characterized by** use for training and/or on-line learning for the neural network, with parameters of the mapping rule being adapted during the training and/or during the on-line learning.

**15.** Arrangement for computer-aided determination of a mapping rule, which describes a technical process in a predetermined space, with the technical process being described in the predetermined space by means of model elements,
**characterized in that**
the arrangement has a processor which has the following means:

- means for determining an approximate mapping rule, which describes the technical process approximately and which comprises first model elements, and means for adding at least one second model element to the first model elements by linking the first model elements to the second model element; means for stabilization of the mapping rule in comparison to the approximate mapping rule, **in that** the second model element describes the technical process better in at least a part of the predetermined space than the approximate mapping rule.

**16.** Arrangement according to Claim 15,
**characterized in that** the first model elements can have a number of second model elements added to them.

**17.** Arrangement according to Claim 15 or 16,
**characterized in that** a number of first model elements can be superimposed on the second model element.

**18.** Arrangement according to one of Claims 15 to 17,
**characterized in that** the output variable and/or the input variable are/is multi-dimensional variables/a multi-dimensional variable.

**19.** Arrangement according to one of Claims 15 to 18,
**characterized in that** the mapping rule describes a neural network.

**20.** Arrangement according to one of Claims 15 to 19,
**characterized in that** the neural network is of the multi-adaline type.

**21.** Arrangement according to one of Claims 15 to 20,
**characterized in that** the second model element is of the adaline type.

**22.** Arrangement according to one of Claims 15 to 21,
**characterized in that** the output variable and/or the input variable are/is a process variable and/or a control variable of a technical system.

**23.** Arrangement according to one of Claims 15 to 22, which contains means for using an output variable of the mapping rule for monitoring and/or control of a technical system.

**24.** Arrangement according to Claim 23, which contains means for using an output variable of the mapping rule for monitoring and/or control of a steel rolling system.

**25.** Arrangement according to one of Claims 15 to 24, which contains means for adapting parameters of the mapping rule during training and/or during on-line learning in the course of training and/or on-line learning for the neural network.

**Revendications**

**1.** Procédé pour la détermination assistée par ordinateur d'une spécification de représentation qui décrit un processus technique dans un espace prédéterminé, le processus technique étant décrit dans l'espace prédéterminé par des sous-modèles, **caractérisé en ce que**

- une spécification de représentation approximative est déterminée, laquelle décrit approximativement le processus technique et comporte des premiers sous-modèles,
- ensuite la spécification de représentation est déterminée de telle façon que les premiers sous-modèles sont élargis avec au moins un deuxième sous-modèle en réunissant les premiers sous-modèles avec le deuxième sous-modèle, la spécification de représentation étant stabilisée en comparaison avec la spécification de représentation approximative en raison du fait que le deuxième sous-modèle décrit mieux le processus technique au moins dans une partie de l'espace prédéterminé que la spécification de représentation approximative.

**2.** Procédé selon la revendication 1, **caractérisé en ce que** la spécification de représentation est élargie avec plusieurs deuxièmes sous-modèles.

**3.** Procédé selon la revendication 1 ou 2, **caractérisé en ce que** le deuxième sous-modèle est superposé avec plusieurs premiers sous-modèles.

**4.** Procédé selon l'une dès revendications 1 à 3, **caractérisé en ce que** la variable de sortie et/ou la variable d'entrée est une variable multidimensionnelle.

**5.** Procédé selon l'une des revendications 1 à 4, **caractérisé en ce que** la superposition du deuxième sous-modèle est réalisée en utilisant une fonction de pondération.

6. Procédé selon l'une des revendications 1 à 5, **caractérisé en ce que** la fonction de pondération est déterminée en utilisant une somme de pondérations.

7. Procédé selon l'une des revendications 1 à 6, **caractérisé en ce que** la spécification de représentation est utilisée dans le cadre d'un réseau de neurones.

8. Procédé selon l'une des revendications 1 à 7, **caractérisé en ce que** le réseau de neurones est du type Multi Adaline.

9. Procédé selon l'une des revendications 1 à 8, **caractérisé en ce que** le deuxième sous-modèle est du type Adaline.

10. Procédé selon l'une des revendications 1 à 9, **caractérisé en ce que** la spécification de représentation est décrite de la manière suivante :

$$y = \sum_{k=0}^{nk} \chi_k * act_k \qquad (14)$$

où

$$act_k = (x - \mu_k) * a_k + b_k \qquad (15)$$

$$\chi_k = \frac{g_k}{\sum_{k=0}^{nk} g_k} = \frac{g_k}{g_0 + \sum_{k=1}^{nk} g_k} = \frac{g_k}{g_0 + SG} \qquad (16)$$

$$g_k = \exp\left(-\frac{1}{2 * \sigma_k^2} * (x - \mu_k)^2\right) \qquad (17)$$

$$SG = \sum_{k=1}^{nk} g_k \qquad (18)$$

avec :

| | |
|---|---|
| x, y | variable d'entée, variable de sortie |
| k | variable réglée |
| nk | nombre de centres de cluster des premiers sous-modèles |
| $a_k$ | pente |
| $b_k$ | valeur de biais |
| SG | Somme des pondérations |
| $g_k, g_0$ | fonctions de pondération |
| $\chi_k$ | fonction de partition |
| $act_k$ | Adaline linéaire |
| $\mu_k$ | centre de cluster |
| $\sigma_k$ | variance |

11. Procédé selon l'une des revendications 1 à 10, **caractérisé en ce que** la variable de sortie et/ou la variable d'entrée est une variable de processus et/ou une variable de commande d'une installation technique.

**12.** Procédé selon l'une des revendications 1 à 11, **caractérisé en ce que** l'on procède à la surveillance et/ou la régulation d'une installation technique de telle sorte qu'une variable de sortie de la spécification de représentation est utilisée pour la surveillance et/ou la régulation.

**13.** Procédé selon la revendication 12, **caractérisé en ce que** l'on procède à la surveillance et/ou la régulation d'une installation de laminage de l'acier de telle sorte qu'une variable de sortie de la spécification de représentation est utilisée pour la surveillance et/ou la régulation.

**14.** Procédé selon l'une des revendications 1 à 13, **caractérisé en ce que** l'on procède à une formation et/ou un apprentissage en ligne du réseau de neurones, des paramètres étant adaptés à la spécification de représentation lors de la formation et/ou de l'apprentissage en ligne.

**15.** Système pour la détermination assistée par ordinateur d'une spécification de représentation, qui décrit un processus technique dans un espace prédéterminé, le processus technique étant décrit dans l'espace prédéterminé par des sous-modèles, **caractérisé en ce que** le système comporte un processeur, qui comporte les moyens suivants :

- des moyens pour déterminer une spécification de représentation approximative qui décrit approximativement le processus technique et qui comporte des premiers sous-modèles, et
- des moyens pour élargir les premiers sous-modèles avec au moins un deuxième sous-modèle en réunissant les premiers sous-modèles avec le deuxième sous-modèle ; des moyens pour stabiliser la spécification de représentation en comparaison avec la spécification de représentation approximative, **en ce que** le deuxième sous-modèle décrit mieux le processus technique au moins dans une partie de l'espace prédéterminé que la spécification de représentation approximative.

**16.** Système selon la revendication 15, **caractérisé en ce que** les premiers sous-modèles peuvent être élargis avec plusieurs deuxièmes sous-modèles.

**17.** Système selon la revendication 15 ou 16, **caractérisé en ce que** le deuxième sous-modèle peut être superposé avec plusieurs premiers sous-modèles.

**18.** Système selon l'une des revendications 15 à 17, **caractérisé en ce que** la variable de sortie et/ou la variable d'entrée est une variable multidimensionnelle.

**19.** Système selon l'une des revendications 15 à 18, **caractérisé en ce que** la spécification de représentation décrit un réseau de neurones.

**20.** Système selon l'une des revendications 15 à 19, **caractérisé en ce que** le réseau de neurones est du type Multi Adaline.

**21.** Système selon l'une des revendications 15 à 20, **caractérisé en ce que** le deuxième sous-modèle est du type Adaline.

**22.** Système selon l'une des revendications 15 à 21, **caractérisé en ce que** la variable de sortie et/ou la variable d'entrée est une variable de processus et/ou une variable de commande d'une installation technique.

**23.** Système selon l'une des revendications 15 à 22, qui comporte des moyens pour utiliser une variable de sortie de la spécification de représentation pour surveiller et/ou réguler une installation technique.

**24.** Système selon la revendication 23 qui comporte des moyens pour utiliser une variable de sortie de la spécification de représentation en vue de surveiller et/ou de réguler une installation de laminage de l'acier.

**25.** Système selon l'une des revendications 15 à 24, qui comporte des moyens pour adapter des paramètres de la spécification de représentation pendant la formation et/ou pendant l'apprentissage en ligne dans le cadre d'une formation et/ou d'un apprentissage en ligne du réseau de neurones.

# FIG 1

# FIG 2

```
┌─────────────────────────────┐
│   Meßung von ausgewählten   │
│        Prozeßgrößen         │──201
└─────────────────────────────┘
              │
              ▼
┌─────────────────────────────┐
│     Meßung der Walzkraft    │──202
└─────────────────────────────┘
              │
              ▼
┌─────────────────────────────┐
│     Trainingsdatenvektor    │──203
└─────────────────────────────┘
              │
              ▼
┌─────────────────────────────┐
│        Speicherung          │──204
└─────────────────────────────┘
              │
              ▼
┌─────────────────────────────┐
│  Anlegen des Trainingsdaten-│
│  vektors an das neuronale   │──205
│           Netz              │
└─────────────────────────────┘
              │
              ▼
┌─────────────────────────────┐
│  Ermittlung der Targetgröße │──206
└─────────────────────────────┘
              │
              ▼
┌─────────────────────────────┐
│         Training            │──207
└─────────────────────────────┘
```

# FIG 3